## Europäisches Patentamt
## European Patent Office
## Office européen des brevets

(19)

(11) Veröffentlichungsnummer: **0 143 818**
**B1**

(12) **EUROPÄISCHE PATENTSCHRIFT**

(45) Veröffentlichungstag der Patentschrift:
**08.04.87**

(21) Anmeldenummer: **84901994.8**

(22) Anmeldetag: **15.05.84**

(86) Internationale Anmeldenummer:
**PCT/EP 84/00145**

(87) Internationale Veröffentlichungsnummer:
**WO 84/04518 (22.11.84 Gazette 84/27)**

(51) Int. Cl.⁴: **B 65 H 29/14,** G 06 K 13/12,
**B 65 H 29/42**

(54) **VERTEILFACHSTRECKE FÜR FLACHE SENDUNGEN WIE BRIEFE.**

(30) Priorität: **17.05.83 DE 3317865**

(43) Veröffentlichungstag der Anmeldung:
**12.06.85 Patentblatt 85/24**

(45) Bekanntmachung des Hinweises auf die Patenterteilung:
**08.04.87 Patentblatt 87/15**

(84) Benannte Vertragsstaaten:
**BE DE FR GB IT NL**

(56) Entgegenhaltungen:
**EP-A-0 049 718**
**CH-A-516 463**
**DE-B-1 253 170**
**US-A-3 131 932**
**US-A-3 865 365**

(73) Patentinhaber: **Licentia Patent- Verwaltungs- GmbH,
Theodor- Stern- Kai 1, D-6000 Frankfurt/Main 70
(DE)**

(72) Erfinder: **FRANK, Werner, Gnadensee- Weg 16,
D-7752 Reichenau 2 (DE)**

(74) Vertreter: **Schulze, Harald Rudolf, Dipl.- Ing.,
Licentia Patent- Verwaltungs- GmbH Theodor-
Stern- Kai 1, D-6000 Frankfurt/Main 70 (DE)**

## Beschreibung

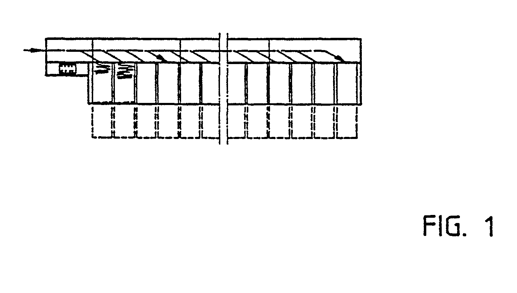

Die Erfindung bezieht sich auf eine Verteilfachstrecke gemäß dem Oberbegriff des Patentanspruchs 1. Eine solche Verteilfachstrecke dient in automatischen Briefverteilanlagen beispielsweise einer Grobverteilung der über die Förderstrecke nacheinander einlaufenden Briefe nach Postleitzahlgebieten und besteht demgemäß im Sinne der Abb. 1 aus mehreren, diesen Gebieten getrennt zugeordneten und hintereinander angeordneten Stapelfächern.

Über eine Fachstrecke mit Weichen werden die Sendungen den einzelnen Stapelfächern zugeordnet und darin abgestapelt. Am Eingang der Fachstrecke befindet sich eine Meßstrecke, in der geprüft wird, ob die Sendung "zu lang" oder die Lücke zwischen den aufeinander folgenden Sendungen zu klein ist. Die Lücke darf einen bestimmten Wert nicht unterschreiten, da sonst die Weiche nicht genügend Zeit hat, um in der Lücke zu öffnen oder zu schließen.

Nicht bearbeitbare Sendungen oder bei zu kleiner Lücke werden die Sendungen in einem Rückweisungsfach ("Rejectfach") abgestapelt.

In der EP-A-49 718 ist eine Einrichtung gemäß dem Oberbegriff des Patentanspruchs 1 beschrieben, bei der flache Sendungen wie Briefe über eine Bandförderstrecke in senkrechter Lage nacheinander einlaufen und automatisch gestapelt werden. Dicht vor ihrer Stapelung erhalten die Sendungen in ihrem Förderweg um ihre Längsachse eine versteifende Krümmung.

Hierzu dient eine Einrichtung, bei der mittels Federkraft eine horizontal verlaufende Rolle jede passierende Sendung seitlich in Höhe deren Längsachse gegen eine hinter der Sendung befindliche horizontale Gegenrolle drückt. Unmittelbar über und unter der Gegenrolle rotieren flexible radiale Fächer, die die versteifende Krümmung jeder Sendung dadurch unterstützen, indem sie die Ober- und Unterkanten jeder Sendung gegen geneigte Leitbleche zwangsanlegen. Diese Leitbleche sind gleichsinnig mit der Sendungskrümmung ausgerichtet.

Nachteilig an der bekannten vorbeschriebenen Einrichtung ist, daß beim Einstapeln mit minimaler Lücke zwischen den Sendungen die Hinterkante der vorauslaufenden Sendungen noch nicht aus dem Einschußbereich ist, so daß die nachfolgende Sendung auf die Hinterkante auffährt. Die Folge ist, es kommt zu einer Störung (Verstopfung) und die Anlage stoppt. Das bedeutet unnötiger Stop der Anlage = Leistungsminderung oder Reduzierung des Durchsatzes.

Dieser Zustand tritt hauptsächlich dann auf, wenn nicht allzu steife oder labile Sendungen und postalische Massenauflieferungen gestapelt werden.

Der Erfindung liegt die Aufgabe zugrunde, in einer gattungsgemäßen Verteilfachstrecke die vorerwähnten verschiedenen Ursachen möglicher Störungen bzw. eine schlechte Stapelqualität zu vermeiden und hierzu die zu stapelnden Sendungen möglichst exakt auf ihre Vorderkanten auszurichten, ihre Faltung zu verhindern und sie nicht mit umgebogenen Ecken zu stapeln; ansonsten können beim Einstapeln in das jeweilige Stapelfach dadurch Störungen auftreten, weil das Einstapeldreieck immer mehr zubaut.

Die erfindungsgemäße Lösung dieser Aufgabe ist dem kennzeichnenden Teil des Anspruchs 1 entnehmbar. Die Unteransprüche beziehen sich auf vorteilhafte Weiterbildungen der Erfindung. Eine Stapelspindel gemäß Anspruch 2 ist auch aus der DE-PS 12 53 170 und der EP-A-49 718 an sich bekannt.

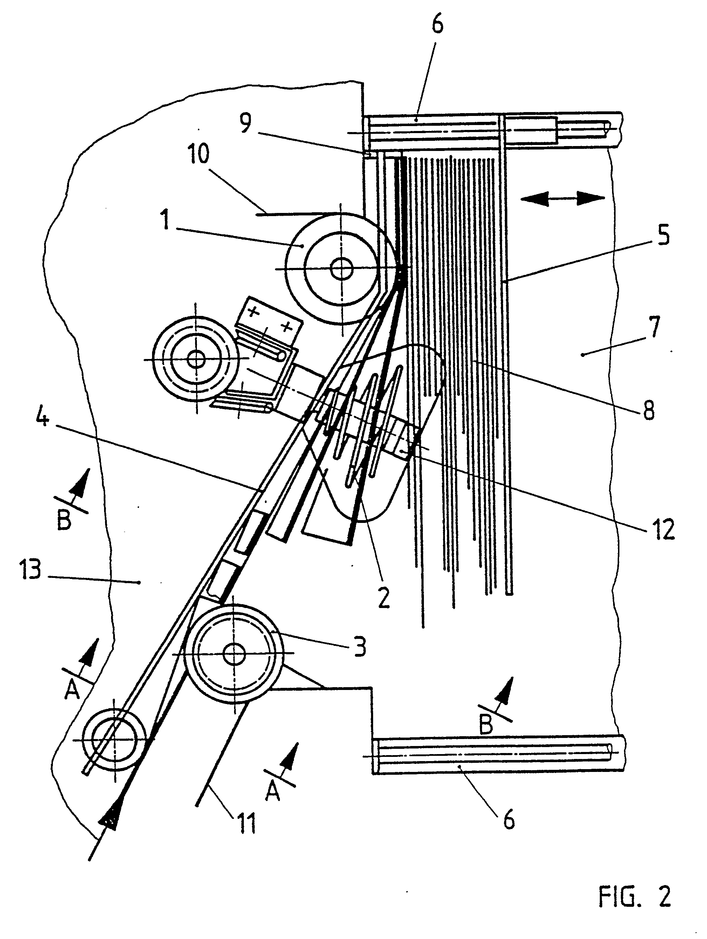

Anhand der Abbildungen 2 bis 4 und der darin gezeigten Ausführungsbeispiele der Erfindung wird diese nunmehr näher beschrieben. Hierbei zeigen:

Abb. 2 Stapelfach mit Stapelspindel und Wulstrolle mit Aufsatz

Ansicht von oben

Es bedeuten:

1 Stapelrolle
2 Stapelspindel
3 Wulstrolle mit Aufsatz 3a
4 Leitblech, Leitzaun 4a
5 Einlegeblech
6 Stapelwand
7 Stapelboden
8 Sendungsstapel, Sendung 8a
9 Anschlag
10 Transportriemen
11 Transportriemen
12 Rillenkugellager
13 Grundplatte

Abb. 3 Schnitt B-B

Einzelne Phasen der Sendung beim Stapelvorgang

Phase a = Einlauf der Sendung
Phase b = Übernahme der Unterkante durch die Stapelspindel
Phase c = Transport in der Stapelspindel
Phase d = Transport in der Stapelspindel
Phase e = Anlegen der Sendung an den Sendungsstapel oder Einlegeblech (Oberkante der Sendung noch nicht am Stapel angelegt)

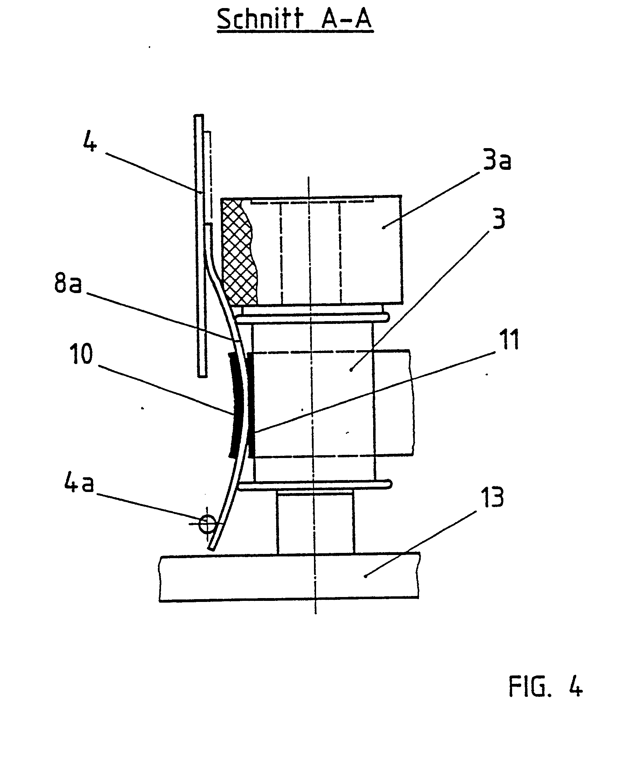

Abb. 4 Schnitt A-A

Wölben der Sendung durch die Wulstrolle 3

Anlegen der Sendung an das Leitblech 4 durch den gummi-elastischen Aufsatz 3a.

Jede Sendung wird über ein Deckband 10, 11 der Wulstrolle 3 zugeführt. Die Wulstrolle hat die Aufgabe, die Sendung durchzuwölben (Abb. 4). Die Sendung wird dadurch auf ihrer Längsachse stabil.

Die Aufgabe des gummi-elastischen Aufsatzes 3a ist es, die Sendung im oberen Bereich an das Leitblech 4 anzulegen und daran entlang weiterzuführen.

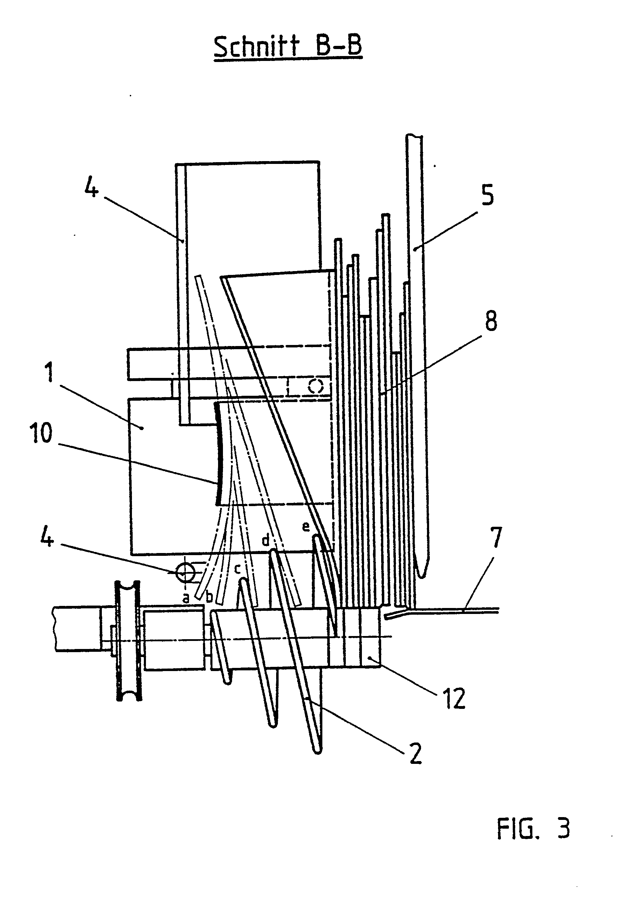

Die Sendung bleibt so lange durchgewölbt, bis die Hinterkante der Sendung von der Wulstrolle 3 freigegeben wird. Die Durchwölbung löst sich auf - die untere Kante der Sendung bewegt sich in Richtung Stapelspindel 2 und wird von dieser übernommen und in Steigungsrichtung zum Stapel 8 bzw. Einlegeblech transportiert. Die Einbaulage der Stapelspindel ist entsprechend. Während dieses Vorgangs wird die Unterkante der Sendung durch die Stapelspindel, nicht aber die Oberkante, gleich schnell aus dem Einschußbereich transportiert (Abb. 3).

Um ein Auffahren auf die hintere obere Ecke der vorauslaufenden bzw. bereits eingestapelten Sendung zu verhindern, wird die Oberkante der nachfolgenden Sendung 8a durch den Aufsatz 3a an das Leitblech 4 zwangsangelegt und geführt (Abb. 4). Ein Berühren der vorauslaufenden hinteren Oberkante (Ecke) mit der nachfolgenden vorderen Oberkante (Ecke) ist ausgeschlossen. Diese Lösung ermöglicht es, eine Sendungsfolge mit minimalster Lücke einzustapeln.

Durch die kegelige Form der Stapelspindel 2 wird der Sendungsstapel 8 abgestützt. Am Spindelende entsteht, verursacht durch den Auslauf des Spindelganges, ein Rütteleffekt, der bewirkt, daß der Sendungsstapel im Bereich der Stapelrolle 1 aufgelockert wird (Stapeldruck wird reduziert, denn der Stapeldruck nimmt mit zunehmender Stapellänge zu). Die Reibung (Stapeldruck) zwischen Sendung und Stapelrolle 1 ist nicht mehr so groß, so daß die einlaufende Sendung sicher bis zum Anschlag 9 durchgezogen bzw. eingeschossen wird.

## Patentansprüche

1. Verteilfachstrecke für flache, über eine Förderstrecke in senkrechter Lage nacheinander einlaufende Sendungen (8a) wie Briefe mit mehreren hintereinander angeordneten Stapelfächern, denen die Sendungen über den einzelnen Fächern getrennt zugeordnete Weichen zugeführt werden, bei der im Förderweg dicht vor jedem einzelnen Stapelfach eine Einrichtung (3) mit zugehörigen Leitblechen (4, 4a) angeordnet ist, die den Sendungen (8a) eine um ihre Längsachse in Förderrichtung versteifende Krümmung erteilt, dadurch gekennzeichnet, daß zu der Einrichtung ein oberhalb deren Längsachse auf die Sendungen einwirkender gummielastischer rollenförmiger Aufsatz (3a) gehört, der die Oberkante jeder Sendung an das ihm gegenüberliegende (4) der Leitbleche derart zwangsanlegt, daß der Sendungsquerschnitt oberhalb der Sendungslängsachse in eine - bezogen auf die versteifende Krümmung um die Sendungslängsachse - entgegengerichtete Krümmung übergeht.

2. Verteilfachstrecke nach Anspruch 1, dadurch gekennzeichnet, daß im Förderweg unmittelbar vor jedem einzelnen Stapelfach eine Stapelspindel (2) angeordnet ist, die aus einem kegelförmigen Spiralkörper besteht und jede einlaufende Sendung in Steigungsrichtung der Spirale zum Stapelfach transportiert.

3. Verteilfachstrecke nach Anspruch 2, dadurch gekennzeichnet, daß das jeweilige kegelbodenseitige Spindelende den ihm zugeordneten Stapel (8) abstützt, so daß letzterer durch den Auslauf des Spindelganges gerüttelt wird.

4. Verteilfachstrecke nach Anspruch 2 oder 3, dadurch gekennzeichnet, daß die Einbaulage jeder Stapelspindel derart gewählt ist, daß die Unterkante jeder Sendung - nicht aber deren Oberkante - während des Sendungstransports durch die Spindel gleichschnell aus dem Einschußbereich transportiert wird.

## Claims

1. Distribution compartment track for flat consignments (8a), such as letters, running in one after the other in vertical position by way of a conveyor track, with several stacking compartments, which are arranged one behind the other and to which the consignments are conducted by way of routing switches separately associated with the individual compartments, wherein an equipment (3) with associated metal guide plates (4, 4a) is arranged in the conveying path closely in front of each individual stacking compartment, which equipment imparts a curvature stiffening in conveying direction to the consignments about their longitudinal axis, characterised thereby, that belonging to the equipment is a rubber-elastic, roller-shaped attachment (3a), which acts on ths consignments above their longitudinal axis and forcibly lays the upper edge of each consignment against that one (4) of the metal guide plates, which lies opposite to it, in such a manner that the consignment cross-section above the longitudinal axis passes over into an oppositely directed curvature with respect to the stiffening curvature about the longitudinal axis of the consignment.

2. Distribution compartment track according to claim 1, characterised thereby, that arranged in the conveying path directly in front of each individual stacking compartment is a stacking spindle (2), which consists of a conical spiral body and transports each incoming consignment in rising direction of the spiral to the stacking compartment.

3. Distribution compartment track according to claim 2, characterised thereby, that the respective spindle end at the base side of the cone supports the stack (8) associated with it so that the stack is shaken by the running-out of the spindle thread.

4. Distribution compartment track according to claim 2 or 3, characterised thereby, that the installed position of each stacking spindle is chosen in such a manner that the lower edge of each consignment, but not its upper edge, is transported equally fast out of the input region by the spindle during the transport of the consignment.

## Revendications

1. Voie de distribution à cases pour objets plats envoyés (8a), tels que des lettres, entrant les uns à la suite des autres en position verticale par un appareil de transport, la voie de distribution comprenant plusieurs cases d'empilage, disposées les unes après les autres et auxquelles les objets sont amenés par des aiguilles coordonnées séparément aux différentes cases, de même que, sur le trajet de transport, à faible distance devant chaque case, un dispositif (3) equipe de tôles de guidage (4, 4a) pour conferer aux objets (8a) une courbure, autour de leur axe longitudinal, courbure qui les raidit dans la direction de transport, caractérisée en ce que le dispositif comprend un élément rapporté (3a), en forme de rouleau et ayant l'élasticité du caoutchouc, qui agit sur les objets, au-dessus de leur axe longitudinal, en appliquant le bord supérieur de chaque objet par force contre la tôle de guidage (4) située en face dudit élément, de telle manière que l'objet, vu en coupe, prend, au-dessus de son axe longitudinal, une courbure contraire à la courbure raidisseuse autour de cet axe.

2. Voie de distribution selon la revendication 1, caractérisée en ce qu'elle comprend, sur le trajet de transport, directement devant chaque case, une vis d'empilage (2) formée d'un corps conique spiralé et qui transporte chaque objet entrant dans le sens de l'augmentation du rayon du filet spiralé vers la case d'empilage.

3. Voie de distribution selon la revendication 2, caractérisée en ce que l'extrémité de vis située du côté du grand diamètre du corps conique supporte la pile (8) formée par la vis, de sorte que la sortie du filet de la vis secoue la pile.

4. Voie de distribution selon la revendication 2 ou 3, caractérisée en ce que l'emplacement où est montée chaque vis d'empilage est choisi de manière que, pendant le transport des objets, la vis évacue le bord inférieur de chaque objet à la même vitesse de la zone d'arrivée, mais qu'il n'en est pas de même pour le bord supérieur de l'objet.

FIG. 1

FIG. 2

## Schnitt B-B

FIG. 3

## Schnitt  A-A

FIG. 4